# EUROPÄISCHE PATENTSCHRIFT

(11) **EP 3 784 502 B1**
(45) Veröffentlichungstag und Bekanntmachung des Hinweises auf die Patenterteilung: **08.06.2022**
(21) Anmeldenummer: 19705117.0
(22) Anmeldetag: 04.02.2019
(51) Int. Cl.: B60C 9/22

(54) **FAHRZEUGLUFTREIFEN**
PNEUMATIC TYRE FOR A VEHICLE
PNEUMATIQUE DE VÉHICULE

(30) Priorität: 27.04.2018 DE 102018206562
(43) Veröffentlichungstag der Anmeldung: 03.03.2021
(73) Patentinhaber: Continental Reifen Deutschland GmbH, 30165 Hannover (DE)
(72) Erfinder: REESE, Wolfgang, 30419 Hannover (DE); KRAMER, Thomas, 30419 Hannover (DE)
(74) Vertreter: Continental Corporation
(86) Internationale Anmeldenummer: PCT/EP2019/052591
(87) Internationale Veröffentlichungsnummer: WO 2019/206477

(56) Entgegenhaltungen:
- EP-A1- 2 829 419
- EP-A2- 0 235 579
- WO-A1-2014/187615
- DE-A1- 4 209 817
- DE-A1-102016 202 930
- DE-T5-112004 001 712
- JP-A- 2004 224 074
- JP-A- 2007 137 199
- JP-A- 2007 196 740

## Beschreibung

Die Erfindung betrifft einen schnelllauffesten Fahrzeugluftreifen für PKW mit einer Karkasse, mit einem Laufstreifen und einem Gürtellagen aufweisenden Gürtel, welcher radial außen durch eine Gürtelbandage mit etwa in Umfangsrichtung orientierten Festigkeitsträgern abgedeckt ist, wobei die Gürtelbandage zumindest eine Gürtelbandagenlage aufweist, welche - im Reifenquerschnitt betrachtet - aus drei Abschnitten besteht, nämlich einem Mittenabschnitt und zwei Seitenabschnitten, wobei ein Seitenabschnitt links und ein Seitenabschnitt rechts vom Mittenabschnitt angeordnet ist und wobei die Festigkeitsträger des Mittenabschnittes die Konstruktion x1 aufweisen und wobei die Festigkeitsträger der zwei Seitenabschnitte gleiche Korde aus wenigstens zwei miteinander verdrehten Garnen aufweisen.

Ein derartiger Fahrzeugreifen ist beispielsweise aus der JP 2007 1967 40 A oder aus der JP 2009 1730 66 A bekannt. Die Gürtelbandagenlage ist dreiteilig mit einem Mittenabschnitt und zwei Seitenabschnitten ausgebildet, wobei die Festigkeitsträger im Mittenabschnitt die Konstruktion x1 aufweisen und die Festigkeitsträger der Seitenabschnitte die Konstruktion x2 aufweisen. In der JP 2009 1730 66 A sind die Festigkeitsträger aller drei Abschnitte der Gürtelbandagenlage aus PA6.6, in der JP 2007 1967 40 A bestehen die Festigkeitsträger des Mittenabschnittes aus PA6.6 und die Festigkeitsträger der Seitenabschnitte aus PEN. Diese Konstruktion der Gürtelbandage hat Vorteile hinsichtlich des Straßengeräusches, hinsichtlich der Hochgeschwindigkeitsperformance sowie hinsichtlich des Rollwiderstandes und des Flatspottings. Letztere beiden Vorteile werden durch die Verwendung eines Festigkeitsträgers der Konstruktion x1 erreicht, da der Festigkeitsträger einen geringeren Durchmesser als ein vergleichbarer x2 Kord gleicher Gesamtfeinheit aufweist, wodurch eine dünnere kalandrierte Lager mit weniger Kautschukmaterial erhalten ist.

Jedoch sind die dem Mittenabschnitt der beiden Seitenabschnitte zugewandten Kanten mit dem Mittenabschnitt überlappend angeordnet. Diese Überlappung wirkt sich negativ auf den Abrieb des Fahrzeugreifens aus.

Allgemein ist es dem Fachmann hinreichend bekannt, eine Gürtelbandage in Fahrzeugluftreifen anzuordnen. Die Gürtelbandage ist ein- oder mehrlagig ausgebildet, deckt zumindest die Gürtelränder ab und weist parallel und in eine Kautschukmischung eingebettete etwa in Umfangsrichtung verlaufende Festigkeitsträger auf. "Etwa in Umfangsrichtung" meint einen Winkel von 0° bis 5° in Bezug auf die Reifenumfangsrichtung.

Die Gürtelbandage wird bei der Reifenherstellung in Form von Lagen, Streifen oder Einzel-Festigkeitsträgern mit in eine unvulkanisierte Kautschukmischung eingebetteten Festigkeitsträgern aufgebracht, die auf den Gürtel gewickelt oder gespult werden. Die Festigkeitsträger werden in Kautschuk eingebettet, indem eine Schar von im Wesentlichen parallel liegenden fadenförmigen Festigkeitsträgern, die in der Regel thermisch und/oder zur besseren Haftung am einbettenden Gummi in einer der fachkundigen Person bekannten Art mit einer Imprägnierung vorbehandelt sind, in Längsrichtung einen Kalander oder einen Extruder zur Ummantelung mit der Kautschukmischung durchläuft. Oder aber es werden Festigkeitsträger verwendet, die klebrig imprägniert sind und ohne eine kalandrierte Haftmischung verarbeitet werden können.

Die Gürtelbandage dient insbesondere im Hochgeschwindigkeitseinsatz dazu, eine Erhebung des Reifen durch die im Fahrbetrieb auftretenden Fliehkräfte zu begrenzen. Zudem sollen die Festigkeitsträger der Gürtelbandage die Gürtellagen, insbesondere die Gürtelkanten für die Schnelllauffestigkeit und Dauerhaltbarkeit niederhalten. Hierfür müssen in den Schulterbereichen des Fahrzeugluftreifens größere Kräfte, insbesondere Zug/Druck-Wechselbelastungen gebunden werden, als im Mittenbereich.

Es ist daher die Aufgabe der vorliegenden Erfindung, einen schnelllauffesten und rollwiderstandsoptimierten Fahrzeugluftreifen mit einer derartigen Gürtelbandage bereitzustellen, welcher zudem einen gleichmäßigeren Abrieb aufweist.

Gelöst wird die Aufgabe erfindungsgemäß dadurch, dass die beiden Seitenabschnitte neben dem Mittenabschnitt, also ohne Überlappung mit dem Mittenabschnitt, angeordnet sind, dass die Dichte der Festigkeitsträger im Mittenabschnitt geringer als die Dichte der Festigkeitsträger in den Seitenabschnitten ist und dass das zum Mittenabschnitt weisende jeweilige Ende der Seitenabschnitte jeweils einen Abstand von 5 mm - 30 mm, bevorzugt einen Abstand von 5 mm - 15 mm zum äußeren Ende der breitesten Gürtellage aufweist, wobei der Abstand in axialer Richtung gemessen wird.

Erfindungswesentlich ist, dass die Festigkeitsträger im Mittenabschnitt die Konstruktion x1, in den Seitenabschnitten die Konstruktion x2 oder höher aufweisen und ohne Überlappung miteinander angeordnet sind. Gleichzeitig ist die Dichte der Festigkeitsträger im Mittenabschnitt geringer als in den Seitenabschnitten. Dadurch, dass auf eine Überlappung und somit auf eine lokale Materialverdickung verzichtet ist, ist der Abrieb positiv beeinflusst. Durch die Konstruktion x1 im Mittenabschnitt ergibt sich eine dünnere Lagenstärke, welche zusammen mit dem größeren Kord-zu-Kord-Abstand einen deutlichen Rollwiderstandsvorteil bringt.

Eine "Konstruktion x2 oder höher" meint eine Konstruktion x3, x4 etc.

In einer bestimmten Ausführung der Erfindung weisen die Festigkeitsträger im Mittenabschnitt die Konstruktion x1 und die Festigkeitsträger in den beiden Seitenabschnitten die Konstruktion x2 auf.

Dadurch, dass auf eine Überlappung und somit auf eine lokale Materialverdickung verzichtet ist, ist der Abrieb positiv beeinflusst. Durch die Konstruktion x1 im Mittenabschnitt ergibt sich eine dünnere Lagenstärke, welche zusammen mit dem größeren Kord-zu-Kord-Abstand einen deutlichen Rollwiderstandsvorteil bringt. Ein Konstruktionsbeispiel ist hierzu in der einzigen Tabelle enthalten.

In einer alternativen Ausführung der Erfindung weisen die Festigkeitsträger im Mittenabschnitt die Konstruktion x1 und die Festigkeitsträger in den beiden Seitenabschnitten die Konstruktion x3 oder x4 auf. Hierdurch ist eine weitere Erhöhung der Ermüdungsbeständigkeit in den Seitenabschnitten erreicht. Ein Konstruktionsbeispiel hierzu der Festigkeitsträger in dtex ist in den Seitenabschnitten ein Festigkeitsträger 470x3, im Mittenabschnitt 1400x1.

Vorteilhaft ist es, wenn die (Gesamt-)Feinheit eines jeden Festigkeitsträgers des Mittenbereiches im Vergleich zu der (Gesamt-)Feinheit eines jeden Festigkeitsträgers der Seitenabschnitte einen Unterschied von 1 - 50%, bevorzugt von 0 - 30%, besonders bevorzugt von 0 - 10%, ganz besonders bevorzugt von 0 - 3% aufweist, wobei bei unterschiedlichen (Gesamt-)Feinheiten der Festigkeitsträger des Mittenbereiches zum Seitenbereich die (Gesamt-)Feinheit der Festigkeitsträger der Seitenabschnitte größer ist (also dicker ist).

In einer bestimmten Ausführung der Erfindung sind die Festigkeitsträger des Mittenabschnittes und die Festigkeitsträger der Seitenabschnitte aus dem gleichen Material, wie beispielsweise aus Polyamid, vorzugsweise PA6.6, PA oder PES, vorzugsweise PET. Konstruktionsbeispiele sind in dtex
Seitenabschnitt PA6.6/Mittenabschnitt PA6.6: 235x2/470x1, 350x2/700x1, 470x2/940x1, 700x2/1400x1, 940x2/1880x1, 1400x2/2800x1.

In einer anderen Ausführung der Erfindung sind die Festigkeitsträger des Mittenabschnittes aus einem anderen Material als die Festigkeitsträger der Seitenabschnitte, wie beispielsweise die Seitenabschnitte aus PA6.6 und der Mittenabschnitt aus PET oder PA6. Konstruktionsbeispiele hierfür sind in dtex
Seitenabschnitt PA6.6/Mittenabschnitt PET: 235x2/550x1, 350x2/720x1, 470x2/1100x1, 700x2/1440x1, 940x2/1670x1, 1400x2/2200x1.

Durch die höhere thermische Stabilität des PET im Vergleich zu PA6.6 sind Vorteile im Flatspot erhalten. Zudem nimmt PET weniger Feuchtigkeit auf bzw. ist dessen Transport geringer gegenüber PA6.6, so dass Vorteile hinsichtlich einer möglichen Korrosion des Gürtels erhalten ist.

Vorteilhaft ist es, wenn die Festigkeitsträger des Mittenbereiches die Konstruktion 470dtex x1 und die Festigkeitsträger der Seitenabschnitte die Konstruktion 235dtex x2 aufweisen oder wenn die Festigkeitsträger des Mittenbereiches die Konstruktion 700dtex x1 und die Festigkeitsträger der Seitenabschnitte die Konstruktion 350dtex x2 aufweisen oder wenn die Festigkeitsträger des Mittenbereiches die Konstruktion 940dtex x1 und die Festigkeitsträger der Seitenabschnitte die Konstruktion 470dtex x2 aufweisen oder wenn die Festigkeitsträger des Mittenbereiches die Konstruktion 1400dtex x1 und die Festigkeitsträger der Seitenabschnitte die Konstruktion 700dtex x2 aufweisen oder wenn die Festigkeitsträger des Mittenbereiches die Konstruktion 1880dtex x1 und die Festigkeitsträger der Seitenabschnitte die Konstruktion 940dtex x2 aufweisen.

Die x2- x3 oder x4- Konstruktion in den Seitenabschnitten sind beständiger bezüglich dynamischer Zug/Druck-Wechselbelastung. Sie ermüden weniger schnell und die Haltbarkeit des Reifens ist verbessert. Die x1 Konstruktion im Mittenbereich ist vorteilhaft für den Rollwiderstand und aufgrund eines geringeren Schrumpfes vorteilhaft für das Flatspotting.

Zweckmäßig ist es, wenn die Gürtelbandage die Konstruktion 1-1-1 oder 2-2-2 oder 2-1-2 oder 3-2-3 aufweist. Hierdurch ist die Gürtelbandage gut an die gewünschten Anforderungen anzupassen. Dabei entspricht die genannte Zahl der Anzahl der übereinander liegenden Gürtelbandagenabschnitten und die Aufzählung entspricht der Reihenfolge: Seitenabschnitt - Mittenabschnitt - Seitenabschnitt.

Der Twistfaktor α eines jeden Multifilamentgarnes oder des Kordes liegt
- für einen x2-Kord in einem Bereich von 80 bis 270, vorzugsweise in einem Bereich von 140 bis 210 und
- für einen x1-Festigkeitsträger in einem Bereich von 10 bis 100, vorzugsweise in einem Bereich von 30 bis 80, wobei α=Twist [t/m] × (Feinheit [tex]/1000)^{1/2}.

Für das Ausführungsbeispiel der nachstehenden Tabelle beträgt der Twistfaktor α für die Festigkeitsträger der Seitenabschnitte 150+/-70 und für die Festigkeitsträger des Mittenabschnittes 40+/-30.

Für das Material PET beträgt der Twistfaktor α für die Festigkeitsträger der Seitenabschnitte 200+/-70 und für die Festigkeitsträger des Mittenabschnittes 70+/-30. Ausführungsbeispiele für PA6.6-Festigkeitsträger Seitenabschnitte/ PET-Festigkeitsträger Mittenabschnitt sind: 235x2/550x1, 350x2/720x1, 470x2/1100x1, 700x2/1440x1, 940x2/1670x1, 1400x2/2200x1

In der nachfolgenden Tabelle ist ein bevorzugtes Ausführungsbeispiel der Gürtelbandage mit einer Gürtelbandagenlage der Konstruktion 1-1-1 eines erfindungsgemäßen Fahrzeugreifens aufgeführt:

**Tab.**

| | Seitenabschnitte | Mittenab schnitt |
|---|---|---|
| Material | PA6.6 | PA6.6 |
| Festigkeitsträger- | 470dtex x2 | 940dtex x 1 |
| konstruktion | | |
| Dichte in epdm | 130 | 120 |
| Durchmesser des Festigkeitsträgers in mm | 0,40 | 0,30 |
| Shrinkage in % | 5,0 | 3,8 |
| Res. Shrinkage in % | 2,5 | 2,1 |

Die Konstruktion 1-1-1 bedeutet: 1 Lage Seitenabschnitt - 1 Lage Mittenabschnitt - eine Lage Seitenabschnitt.

### Weitere Merkmale, Vorteile und Einzelheiten der Erfindung werden nun anhand der

Figuren, die ein schematisches Ausführungsbeispiel darstellen, näher beschrieben. Dabei zeigt die:
Fig. 1 einen Querschnitt durch einen Fahrzeugluftreifen;
Fig. 2 einen Querschnitt durch den Gürtel und die Gürtelbandage des Fahrzeugluftreifens der Fig. 1.

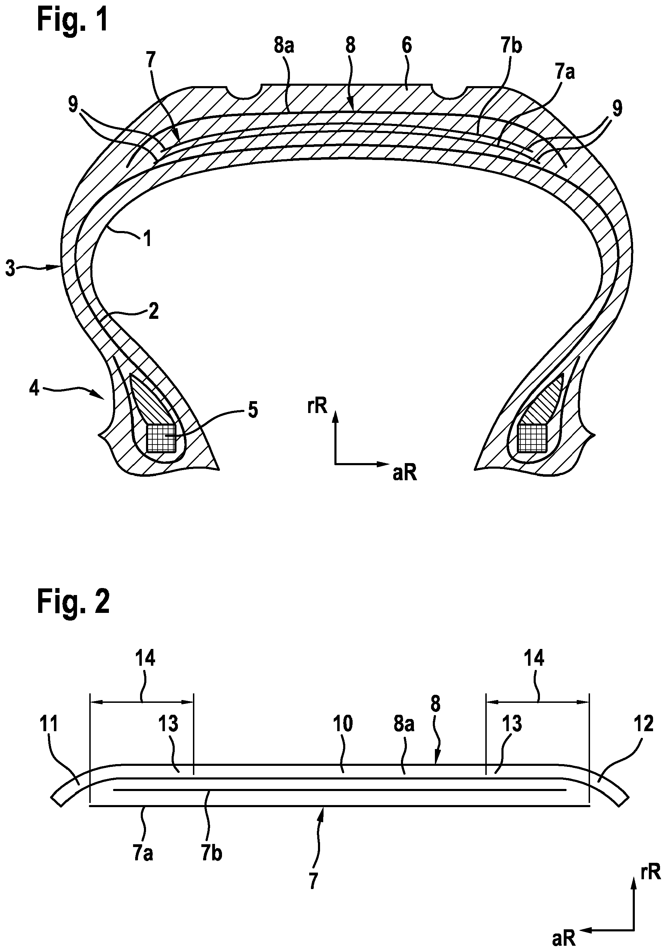

Die Figur 1 zeigt einen Querschnitt durch einen schnelllauffesten Fahrzeugluftreifen für einen Personenkraftwagen, während die Figur 2 einen Querschnitt durch den Gürtel und die den Gürtel abdeckende Gürtelbandage des Fahrzeugluftreifens der Figur 1 zeigt. Beide

Figuren werden nachfolgend gemeinsam beschrieben. Die wesentlichen Bauteile, aus welchen sich der dargestellte Fahrzeugluftreifen zusammensetzt, sind eine weitgehend luftundurchlässige Innenschicht 1, eine Karkasse 2, die in herkömmlicher Weise vom Zenitbereich des Fahrzeugluftreifens über die Seitenwände 3 bis in die Wulstbereiche 4 reicht und dort durch Umschlingen zugfester Wulstkerne 5 verankert ist, einen radial oberhalb der Karkasse 2 befindlichen profilierten Laufstreifen 6 und einen zwischen dem Laufstreifen 6 und der Karkasse 2 angeordneten, zwei Gürtellagen 7a, 7b beinhaltenden Gürtel 7, welcher radial außen mit einer Gürtelbandage 8 abgedeckt ist, welche eine einzige Gürtelbandagenlage 8a umfasst. Die Gürtelbandagenlage 8a deckt den Gürtel samt dessen Gürtelkanten 9 ab. Die Gürtelbandagenlage 8 weist Festigkeitsträger (nicht dargestellt) auf, welche parallel und etwa in Umfangsrichtung des Fahrzeugluftreifens entlang dessen axialer Breite gewickelt sind.

Die Gürtelbandagenlage 8a besteht aus drei nebeneinander angeordneten Abschnitten: einem Mittenabschnitt 10 und jeweils einem an den Mittenabschnitt 10 angrenzenden Seitenabschnitt 11, 12. Somit weist die Gürtelbandagenlage 8a die Konstruktion 1-1-1 auf. Die beiden Seitenabschnitte 11, 12 sind also ohne Überlappung mit dem Mittenabschnitt 10 angeordnet. Das jeweils zum Mittenabschnitt 10 weisende Ende13 der Seitenabschnitte weist jeweils einen Abstand 14 von 5 mm - 15 mm zum nächstgelegenen äußeren Ende der breitesten Gürtellage auf, wobei der Abstand 14 in axialer Richtung aR gemessen wird. Die Festigkeitsträger im Mittenabschnitt 10 weisen die Konstruktion x1 und die Festigkeitsträger in den beiden Seitenabschnitten 11, 12 weisen die Konstruktion x2 auf, wobei alle Festigkeitsträger der Gürtelbandagenlage 8a aus dem gleichen Material, aus PA6.6, bestehen. Die Gesamtfeinheit eines jeden Festigkeitsträgers beträgt 940 dtex. Die Konstruktion eines jeden Festigkeitsträgers ist in den Seitenabschnitten 11, 12 470dtex x2 und eines jeden Festigkeitsträgers in dem Mittenabschnitt 10 940dtex x1. Aufgrund der unterschiedlichen Konstruktion der Festigkeitsträger im Mittenabschnitt 10 zu Seitenabschnitt 11, 12 ergibt sich hieraus ein Durchmesser des Festigkeitsträgers im Seitenabschnitt 11, 12 von 0,40mm und im Mittenabschnitt 10 von 0,30mm. Im Seitenabschnitt 11, 12 sind die Festigkeitsträger in einer Dichte von 130 epdm und im Mittenabschnitt 10 mit einer Dichte von 120 epdm angeordnet. "epdm" steht für ends per decimeter und beschreibt die Dichte, in welcher die Festigkeitsträger in der Verstärkungslage angeordnet sind.

### Bezugszeichenliste

### (Teil der Beschreibung)

- 1: Innenschicht
- 2: Karkasse
- 3: Seitenwand
- 4: Wulstbereich
- 5: Wulstkern
- 6: Laufstreifen
- 7: Gürtel
- 7a 1.: Gürtellage
- 7b 2.: Gürtellage
- 8: Gürtelbandage
- 8a: Gürtelbandagenlage
- 9: Gürtelkante
- 10: Mittenabschnitt
- 11: Seitenabschnitt
- 12: Seitenabschnitt
- 13: Ende des Seitenabschnittes
- 14: Abstand

- rR: radiale Richtung
- aR: axiale Richtung

## Patentansprüche

1. Schnelllauffester Fahrzeugluftreifen für PKW mit einer Karkasse (2), einem Laufstreifen (6) und einem Gürtellagen (7a, 7b) aufweisenden Gürtel (7), welcher radial außen durch eine Gürtelbandage (8) mit in einen Winkel von 0° bis 5° in Bezug auf die Reifenumfangsrichtung orientierten Festigkeitsträgern abgedeckt ist, wobei die Gürtelbandage (8) zumindest eine Gürtelbandagenlage (8a) aufweist, welche - im Reifenquerschnitt betrachtet - aus drei Abschnitten besteht, nämlich einem Mittenabschnitt (10) und zwei Seitenabschnitten (11, 12), wobei ein Seitenabschnitt (11) links und ein Seitenabschnitt (12) rechts vom Mittenabschnitt (10) angeordnet ist und wobei die Festigkeitsträger des Mittenabschnittes (10) die Konstruktion x1 aufweisen und wobei die Festigkeitsträger der zwei Seitenabschnitte (11, 12) gleiche Korde aus wenigstens zwei miteinander verdrehten Garnen aufweisen und wobei durch die Gürtelbandage (8) in den Schulterbereichen des Fahrzeugluftreifens größere Kräfte als im Mittenbereich gebunden werden, **dadurch gekennzeichnet, dass** die beiden Seitenabschnitte (11, 12) neben dem Mittenabschnitt (10), also ohne Überlappung mit dem Mittenabschnitt (10), angeordnet sind, dass die Dichte der Festigkeitsträger im Mittenabschnitt (10) geringer als die Dichte der Festigkeitsträger in den Seitenabschnitten (11, 12) ist und dass das zum Mittenabschnitt (10) weisende Ende der Seitenabschnitte (13) jeweils einen Abstand (14) von 5 mm - 30 mm, bevorzugt einen Abstand (14) von 5 mm - 15 mm zum äußeren Ende der breitesten Gürtellage aufweist, wobei der Abstand (14) in axialer Richtung (aR) gemessen wird

2. Schnelllauffester Fahrzeugluftreifen nach Anspruch 1, **dadurch gekennzeichnet, dass** die Festigkeitsträger im Mittenabschnitt (10) die Konstruktion x1 und die Festigkeitsträger in den beiden Seitenabschnitten (11, 12) die Konstruktion x2 aufweisen.

3. Schnelllauffester Fahrzeugluftreifen nach Anspruch 1, **dadurch gekennzeichnet, dass** die Festigkeitsträger im Mittenabschnitt (10) die Konstruktion x1 und die Festigkeitsträger in den beiden Seitenabschnitten (11, 12) die Konstruktion x3 aufweisen.

4. Schnelllauffester Fahrzeugluftreifen nach einem der vorangehenden Ansprüche, **dadurch gekennzeichnet, dass** die Feinheit eines jeden Festigkeitsträgers des Mittenbereiches (10) im Vergleich zu der Feinheit eines jeden Festigkeitsträgers der Seitenabschnitte (11, 12) einen Unterschied von 1 - 50%, bevorzugt von 0 - 30%, besonders bevorzugt von 0 - 10%, ganz besonders bevorzugt von 0 - 3% aufweisen, wobei bei unterschiedlichen Feinheiten der Festigkeitsträger des Mittenbereiches (10) im Vergleich zu den Feinheiten der Seitenabschnitte (11, 12) die Festigkeitsträger der Seitenabschnitt (11, 12) die größere Feinheit aufweisen.

5. Schnelllauffester Fahrzeugluftreifen nach einem oder mehreren der vorangehenden Ansprüche, **dadurch gekennzeichnet, dass** die Festigkeitsträger des Mittenabschnittes (10) und die Festigkeitsträger der Seitenabschnitte (11, 12) aus dem gleichen Material sind, wie beispielsweise aus Polyamid, vorzugsweise PA6.6, PA oder PES, vorzugsweise PET.

6. Schnelllauffester Fahrzeugluftreifen nach einem der vorangegangenen Ansprüche 1 - 4, **dadurch gekennzeichnet, dass** die Festigkeitsträger des Mittenabschnittes (10) aus einem anderen Material als die Festigkeitsträger der Seitenabschnitte (11, 12) sind, wie beispielsweise die Seitenabschnitte aus PA6.6 und der Mittenabschnitt aus PET oder PA6.

7. Schnelllauffester Fahrzeugluftreifen nach einem der vorangegangenen Ansprüche, **dadurch gekennzeichnet, dass** die Festigkeitsträger des Mittenbereiches (10) die Konstruktion 470dtex x1 und die Festigkeitsträger der Seitenabschnitte (11, 12) die Konstruktion 235dtex x2 aufweisen oder dass die Festigkeitsträger des Mittenbereiches (10) die Konstruktion 700dtex x1 und die Festigkeitsträger der Seitenabschnitte (11, 12) die Konstruktion 350dtex x2 aufweisen oder dass die Festigkeitsträger des Mittenbereiches (10) die Konstruktion 940dtex x1 und die Festigkeitsträger der Seitenabschnitte (11, 12) die Konstruktion 470dtex x2 aufweisen oder dass die Festigkeitsträger des Mittenbereiches (10) die Konstruktion 1400dtex x1 und die Festigkeitsträger der Seitenabschnitte (11, 12) die Konstruktion 700dtex x2 aufweisen oder dass die Festigkeitsträger des Mittenbereiches (10) die Konstruktion 1880dtex x1 und die Festigkeitsträger der Seitenabschnitte (11, 12) die Konstruktion 940dtex x2 aufweisen.

8. Schnelllauffester Fahrzeugluftreifen nach zumindest einem der vorangegangenen Ansprüche, **dadurch gekennzeichnet, dass** die Gürtelbandage (8) die Konstruktion 1-1-1 oder 2-2-2 oder 2-1-2 oder 3-2-3 aufweist.

9. Schnelllauffester Fahrzeugluftreifen nach zumindest einem der vorangegangenen Ansprüche, **dadurch gekennzeichnet, dass** der Twistfaktor α eines jeden Multifilamentgarnes oder des Kordes
- für einen x2-Kord in einem Bereich von 80 bis 270, vorzugsweise in einem Bereich von 140 bis 210 liegt und
- für einen x1-Festigkeitsträger in einem Bereich von 10 bis 100, vorzugsweise in einem Bereich von 30 bis 80 liegt, wobei α=Twist [t/m] × (Feinheit [tex]/1000)^{1/2}.

## Claims

1. Pneumatic vehicle tyre for passenger cars with high-speed strength, comprising a carcass (2), a tread (6) and a belt (7) which has belt plies (7a, 7b) and which is covered radially outwardly by a belt bandage (8) having strengthening elements oriented at an angle of 0° to 5° in relation to the circumferential direction of the tyre, wherein the belt bandage (8) has at least one belt bandage ply (8a) which - as viewed in the tyre cross section - consists of three sections, namely a central section (10) and two lateral sections (11, 12), wherein one lateral section (11) is arranged to the left of the central section (10) and one lateral section (12) is arranged to the right of the central section (10) and wherein the strengthening elements of the central section (10) have the construction x1 and wherein the strengthening elements of the two lateral sections (11, 12) have identical cords consisting of at least two twisted-together yarns and wherein larger forces are bound by the belt bandage (8) in the shoulder regions of the pneumatic vehicle tyre than in the central region, **characterized in that** the two lateral sections (11, 12) are arranged next to the central section (10), that is to say without overlapping with the central section (10), **in that** the density of the strengthening elements in the central section (10) is less than the density of the strengthening elements in the lateral sections (11, 12), and **in that** the end of the lateral sections (13) that points towards the central section (10) in each case has a distance (14) of 5 mm - 30 mm, preferably a distance (14) of 5 mm - 15 mm, from the outer end of the widest belt ply, where the distance (14) is measured in the axial direction (aR).

2. Pneumatic vehicle tyre with high-speed strength according to Claim 1, **characterized in that** the strengthening elements in the central section (10) have the construction x1 and the strengthening elements in the two lateral sections (11, 12) have the construction x2.

3. Pneumatic vehicle tyre with high-speed strength according to Claim 1, **characterized in that** the strengthening elements in the central section (10) have the construction x1 and the strengthening elements in the two lateral sections (11, 12) have the construction x3.

4. Pneumatic vehicle tyre with high-speed strength according to one of the preceding claims, **characterized in that** the fineness of each strengthening element of the central region (10) by comparison with the fineness of each strengthening element of the lateral sections (11, 12) has a difference of 1 - 50%, preferably of 0 - 30%, particularly preferably of 0 - 10%, very particularly preferably of 0 - 3%, wherein in the case of different finenesses of the strengthening elements of the central region (10) by comparison with the finenesses of the lateral sections (11, 12), the strengthening elements of the lateral sections (11, 12) have the greater fineness.

5. Pneumatic vehicle tyre with high-speed strength according to one or more of the preceding claims, **characterized in that** the strengthening elements of the central section (10) and the strengthening elements of the lateral sections (11, 12) are made of the same material, such as for example polyamide, preferably PA6.6, PA or PES, preferably PET.

6. Pneumatic vehicle tyre with high-speed strength according to one of the preceding Claims 1 - 4, **characterized in that** the strengthening elements of the central section (10) are made of a different material than the strengthening elements of the lateral sections (11, 12), such as for example the lateral sections being made of PA6.6 and the central section being made of PET or PA6.

7. Pneumatic vehicle tyre with high-speed strength according to one of the preceding claims, **characterized in that** the strengthening elements of the central region (10) have the construction 470dtex x1 and the strengthening elements of the lateral sections (11, 12) have the construction 235dtex x2, or **in that** the strengthening elements of the central region (10) have the construction 700dtex x1 and the strengthening elements of the lateral sections (11, 12) have the construction 350dtex x2, or **in that** the strengthening elements of the central region (10) have the construction 940dtex x1 and the strengthening elements of the lateral sections (11, 12) have the construction 470dtex x2, or **in that** the strengthening elements of the central region (10) have the construction 1400dtex x1 and the strengthening elements of the lateral sections (11, 12) have the construction 700dtex x2, or **in that** the strengthening elements of the central region (10) have the construction 1880dtex x1 and the strengthening elements of the lateral sections (11, 12) have the construction 940dtex x2.

8. Pneumatic vehicle tyre with high-speed strength according to at least one of the preceding claims, **characterized in that** the belt bandage (8) has the construction 1-1-1 or 2-2-2 or 2-1-2 or 3-2-3.

9. Pneumatic vehicle tyre with high-speed strength according to at least one of the preceding claims, **characterized in that** the twist factor α of each multifilament yarn or of the cord
- lies in a range from 80 to 270, preferably in a range from 140 to 210, for a x2 cord, and
- lies in a range from 10 to 100, preferably in a range from 30 to 80, for a x1 strengthening element, where α=twist [t/m] × (fineness [tex]/1000)^{1/2}.

## Revendications

1. Pneumatique de véhicule stable à haute vitesse destiné aux voitures particulières, comprenant une carcasse (2), une bande de roulement (6) et une ceinture (7) présentant des nappes de ceinture (7a, 7b) et qui est recouvert radialement à l'extérieur par un bandage de ceinture (8) doté de renforts orientés selon un angle de 0° à 5° par rapport à la direction circonférentielle du pneu, le bandage de ceinture (8) présentant au moins une nappe de bandage de ceinture (8a) qui - vue en section transversale du pneu - se compose de trois sections, notamment d'une section centrale (10) et de deux sections latérales (11, 12), une section latérale (11) étant disposée à gauche et une section latérale (12) étant disposée à droite de la section centrale (10), et les renforts de la section centrale (10) présentant la construction x1, et les renforts des deux sections latérales (11, 12) présentant la même corde composée d'au moins deux fils retordus ensemble, et le bandage de ceinture (8) engageant dans les zones d'épaule du pneumatique de véhicule des forces plus grandes que dans la partie centrale,
**caractérisé en ce que** les deux sections latérales (11, 12) sont disposées à côté de la section centrale (10), donc sans chevauchement avec la section centrale (10), **en ce que** la densité des renforts dans la section centrale (10) est inférieure à la densité des renforts dans les sections latérales (11, 12), et **en ce que** l'extrémité, tournée vers la section centrale (10), des sections latérales (13) présente respectivement une distance (14) de 5 mm à 30 mm, de préférence une distance (14) de 5 mm à 15 mm, par rapport à l'extrémité extérieure de la nappe de ceinture la plus large, la distance (14) étant mesurée dans la direction axiale (aR).

2. Pneumatique de véhicule stable à haute vitesse selon la revendication 1, **caractérisé en ce que** les renforts dans la section centrale (10) présentent la construction x1, et les renforts dans les deux sections latérales (11, 12) présentent la construction x2.

3. Pneumatique de véhicule stable à haute vitesse selon la revendication 1, **caractérisé en ce que** les renforts dans la section centrale (10) présentent la construction x1, et les renforts dans les deux sections latérales (11, 12) présentent la construction x3.

4. Pneumatique de véhicule stable à haute vitesse selon l'une quelconque des revendications précédentes, **caractérisé en ce que** la finesse de chaque renfort de la zone centrale (10) présente en comparaison avec la finesse de chaque renfort des sections latérales (11, 12) une différence de 1 à 50 %, de préférence de 0 à 30%, de manière particulièrement préférée de 0 à 10%, de manière tout particulièrement préférée de 0 à 3%, dans lequel, pour des finesses différentes des renforts de la zone centrale (10) en comparaison avec les finesses des sections latérales (11, 12), les renforts de la section latérale (11, 12) présentent la finesse plus grande.

5. Pneumatique de véhicule stable à haute vitesse selon une ou plusieurs des revendications précédentes, **caractérisé en ce que** les renforts de la section centrale (10) et les renforts des sections latérales (11, 12) sont composés du même matériau, tel que par exemple de polyamide, de préférence de PA6.6, de PA ou de PES, de préférence de PET.

6. Pneumatique de véhicule stable à haute vitesse selon l'une quelconque des revendications précédentes 1 à 4, **caractérisé en ce que** les renforts de la section centrale (10) sont composés d'un autre matériau que les renforts des sections latérales (11, 12), comme par exemple les sections latérales de PA6.6 et la section centrale de PET ou de PA6.

7. Pneumatique de véhicule stable à haute vitesse selon l'une quelconque des revendications précédentes, **caractérisé en ce que** les renforts de la zone centrale (10) présentent la construction 470dtex x1 et les renforts des sections latérales (11, 12) présentent la construction 235dtex x2, ou **en ce que** les renforts de la zone centrale (10) présentent la construction 700dtex x1 et les renforts des sections latérales (11, 12) présentent la construction 350dtex x2, ou **en ce que** les renforts de la zone centrale (10) présentent la construction 940dtex x1 et les renforts des sections latérales (11, 12) présentent la construction 470dtex x2, ou **en ce que** les renforts de la zone centrale (10) présentent la construction 1400dtex x1 et les renforts des sections latérales (11, 12) présentent la construction 700dtex x2, ou **en ce que** les renforts de la zone centrale (10) présentent la construction 1880dtex x1 et les renforts des sections latérales (11, 12) présentent la construction 940dtex x2.

8. Pneumatique de véhicule stable à haute vitesse selon au moins l'une des revendications précédentes, **caractérisé en ce que** le bandage de ceinture (8) présente la construction 1-1-1 ou 2-2-2 ou 2-1-2 ou 3-2-3.

9. Pneumatique de véhicule stable à haute vitesse selon au moins l'une des revendications précédentes, **caractérisé en ce que** le facteur de torsion de chaque fil multifilament ou de la corde se trouve
- pour une corde x2 dans une plage de 80 à 270, de préférence dans une plage de 140 à 210, et
- pour un renfort x1 dans une plage de 10 à 100, de préférence dans une plage de 30 à 80, où α = torsion [t/m] × (finesse [tex]/1000)^{1/2}.
